# EUROPÄISCHE PATENTSCHRIFT

(11) **EP 3 222 897 B1**
(45) Veröffentlichungstag und Bekanntmachung des Hinweises auf die Patenterteilung: **24.10.2018**
(21) Anmeldenummer: 17161426.6
(22) Anmeldetag: 16.03.2017
(51) Int. Cl.: F16K 31/06, B60T 13/66, B60T 13/68, B60T 15/02, B60T 17/22, H01F 7/14

(54) **KIPPANKERVENTIL UND VERFAHREN ZUR HERSTELLUNG DESSELBEN**
TILTING ANCHOR VALVE AND METHOD FOR PRODUCING THE SAME
VANNE À INDUIT BASCULANT ET SON PROCÉDÉ DE FABRICATION

(30) Priorität: 24.03.2016 DE 102016105532
(43) Veröffentlichungstag der Anmeldung: 27.09.2017
(73) Patentinhaber: KNORR-BREMSE Systeme für Nutzfahrzeuge GmbH, 80809 München (DE)
(72) Erfinder: Röther, Friedbert, 74389 Cleebronn (DE); Deeg, Markus, 71735 Eberdingen (DE); Niedermeier, Stefan, 94542 Haarbach (DE)
(74) Vertreter: Aurigium Leischner & Luthe

(56) Entgegenhaltungen:
- EP-A2- 1 353 102
- WO-A2-2004/027829
- DE-B3-102014 115 206
- DE-U1-202010 006 187
- JP-A- S 612 982
- US-A- 5 139 226

## Beschreibung

Die vorliegende Erfindung betrifft ein Kippankerventil sowie ein Verfahren zur Herstellung desselben gemäß den Hauptansprüchen.

In Kippankerventilen wird oftmals eine Lagerung des Kippankers mittels eines Nadellagers vorgenommen. Dieses Nadellager ragt beispielsweise aus einem Gehäuse des Kippankerventils heraus und fixiert eine Achse, um welche sich der Anker bewegen kann. Oftmals ist dabei noch eine seitliche Fixierung dieser Achse, um die sich der Anker bewegen kann, erforderlich, um die Montage des beweglichen Kippankers möglichst einfach auszugestalten. Dies jedoch erfordert viele kleine Bauelemente, deren Montage die Kosten des auf diese Art herzustellenden Kippankerventils erhöhen und die zudem der Robustheit des Kippankerventils abträglich sind.

Die Druckschrift US 5 139 226 A offenbart ein elektromechanisches Fluidkontrollventil.

Die Druckschrift DE 102014 115206 B3 offenbart ein Kippankerventil für ein Druckregelmodul eines Fahrzeugs und Verfahren zum Betreiben eines Kippankerventils.

Die Druckschrift JP S61 2982 A offenbart ein Hubmagnetventil.

Die Druckschrift WO 2004/027829 A2 offenbart einen bistabilen Wandler in einem Düsendämpfersystem.

Die Druckschrift EP 1 353 102 A2 offenbart eine Ventilvorrichtung.

Die Druckschrift DE 20 2010 006187 U1 offenbart ein Magnetventil.

Es ist daher die Aufgabe der vorliegenden Erfindung, eine Möglichkeit zur Verbesserung der Robustheit und zur Reduktion der Herstellungskosten eines Kippankerventils sowie zum verschleißarmen Betrieb eines Kippankerventils zu schaffen.

Diese Aufgabe wird durch den Gegenstand der Hauptansprüche gelöst.
Mit dem hier vorgestellten Ansatz wird ein Kippankerventil, insbesondere für ein Druckregelmodul eines Fahrzeugs, geschaffen, wobei das Kippankerventil zumindest die folgenden Merkmale aufweist:
- ein Spulenelement umfassend mindestens einen Spulenkern und eine radial um den Spulenkern angeordnete Spule;
- einen Anker, der an einer Stirnseite des Ankers mittels eines Lagers gelagert ist, wobei der Anker, insbesondere durch ein Beaufschlagen der Spule mit Strom, von einer ersten Position in eine zweite Position bewegbar ist, wobei das Lager durch eine Erhebung in einem Lagerabschnitt des Ankers oder in dem Spulenelement ausgebildet ist;
- ein Dichtelement, das an der dem Spulenelement zugewandten oder abgewandten Seite des Ankers angeordnet ist; und
- ein Ventilsitz mit einem Ausgang und ein Eingang für ein Fluid ausgebildet ist, wobei der Ausgang in der ersten Position des Ankers mittels des Dichtelements fluiddicht verschließbar ist und/oder wobei der Ausgang in der zweiten Position des Ankers freigegeben ist, insbesondere wobei der Ventilsitz an einer dem Spulenelement zugewandten oder abgewandten Seite in Bezug zum Anker angeordnet ist,
dadurch gekennzeichnet, dass
die Erhebung durch eine in den Lagerabschnitt des Ankers eingebrachte Kugel gebildet ist.

Unter einem Fahrzeug kann ein Fahrzeug mit einem elektronischen oder pneumatischen Betriebsbremssystem verstanden werden. Es kann unter dem Fahrzeug ein Lastkraftwagen oder ein Schienenfahrzeug verstanden werden. Dabei kann das Fahrzeug ein Druckregelmodul aufweisen. Dabei kann das Druckregelmodul ein Teil des elektronischen Betriebsbremssystems sein.

Das Spulenelement kann eine Schnittstelle zum Empfangen eines Steuersignals aufweisen. Das Steuerelement kann ausgebildet sein, bei Anliegen eines Steuersignals oder ansprechend auf das Steuersignal ein Magnetfeld zu erzeugen. Das Kippankerventil kann ausgebildet sein, ein am Eingang anliegendes Fluid an den Ausgang zu leiten. Dabei kann durch die Position des Ankers ein Fluidstrom gesteuert werden. Vorteilhaft ist dabei ein Einsatz des Kippankerventils als Schließer beziehungsweise Ein-/Auslassventil, als Öffner beispielsweise für eine Back-up-Anwendung oder ein universeller Einsatz als Wechsler oder Wechselventil möglich. Unter einem Lagerabschnitt kann ein Teilbereich des Ankers verstanden werden. Unter einer Erhebung kann ein Vorsprung oder eine Ausbuchtung verstanden werden, der/die sich im Lagerabschnitt aus einer Haupterstreckungsebene des Ankers heraus erhebt. Die Erhebung ist durch eine im Lagerabschnitt angeordnete, eingeklebte oder eingepresste Kugel ausgebildet.

Der hier vorgeschlagenen Ansatz einer Ausführungsform für das Kippankerventil basiert auf der Erkenntnis dass durch die Verwendung der Erhebung Lagerabschnitt des Ankers eine sehr einfach herzustellende und robuste Möglichkeit zur Bewegung des Ankers geschaffen wird. Hierbei kann der Anker durch ein Abrollen über die Erhebung auf einer der Erhebung gegenüberliegenden Seite ohne großen Gleitwiderstand bewegt werden. Der hier vorgeschlagene Ansatz bietet dabei den Vorteil, dass die Erhebung im Lagerabschnitt des Ankers technisch sehr einfach und kostengünstig hergestellt werden kann und zugleich eine robuste und wenige fehleranfällige Möglichkeit bietet, die Beweglichkeit des Ankers sicherzustellen.

Denkbar ist ferner eine Ausführungsform des hier vorgeschlagenen Ansatzes, bei der die Erhebung auf einer der Spule zugewandten Seite des Lagerabschnitts des Ankers angeordnet ist. Eine solche Ausführungsform des hier vorgeschlagenen Ansatzes bietet den Vorteil, dass zwischen der Spule und dem Anker durch die Erhebung ein Freiraum gehalten werden kann, der als Bewegungsraum des Ankers verwendet werden kann. Insofern ist eine technisch sehr einfach realisierbare Möglichkeit zur Schaffung eines Bewegungsraums des Ankers möglich.

Auch kann in einer weiteren Ausführungsform des hier vorgestellten Ansatzes die Erhebung ausgebildet sein, um eine Bewegung des Ankers in eine axiale Richtung zum Spulenelement des Kippankventils zu führen.

Besonders vorteilhaft ist eine weitere Ausführungsform des hier vorgeschlagenen Ansatzes, bei dem zumindest eine weitere, beispielsweise zumindest teilweise runde Erhebung in dem Lagerabschnitt vorgesehen ist. Die zumindest eine weitere Erhebung kann dabei analog oder gleichartig zu der bereits genannten Erhebung ausgestaltet sein. Eine solche Ausführungsform des hier vorgeschlagenen Ansatzes bietet den Vorteil, dass durch zumindest zwei Erhebungen die Beweglichkeit des Ankers in eine Vorzugsrichtung eingeschränkt werden kann, sodass einerseits die Störungsanfälligkeit eines solchen Kippankerventils reduziert werden kann und andererseits die Herstellungskosten nicht wesentlich erhöht sind.

Insbesondere kann die weitere Erhebung auf einer der Spule zugewandten oder abgewandten Seite des Lagerabschnitts des Ankers angeordnet sein und/oder zumindest teilweise eine Kugelform oder Kugelkalottenform aufweisen. Auch durch eine solche Ausführungsform des hier vorgestellten Ansatzes kann mit technisch einfachen Mitteln ein robustes Kippankerventil geschaffen werden, bei dem eine bevorzugte Bewegungsrichtung des Ankers sichergestellt ist.

Besonders leicht lässt sich der Anker des Kippankerventils bewegen, wenn gemäß einer Ausführungsform des hier vorgestellten Ansatzes die Erhebung und die weitere Erhebung in einer Richtung zueinander ausgerichtet sind, die eine Drehachse des Ankers bildet.

Denkbar ist ferner eine Ausführungsform des hier vorgeschlagenen Ansatzes, bei der die Kugel in den Lagerabschnitt des Ankers eingepresst und/oder eingegossen ist. Beispielsweise kann eine solche Kugel in eine omega-förmige Aussparung in dem Material des Ankers eingepresst werden. Eine solche Ausführungsform des hier vorgeschlagenen Ansatzes bietet den Vorteil, dass die Kugel beispielsweise ein anderes Material als der Anker aufweist, beispielsweise aus Metall, insbesondere Stahl ist, und hierdurch eine besonders geringe Abnutzung und/oder Reibung einer Bewegung des Ankers verursacht. Ferner lässt sich eine solche Kugel mit technisch einfachen Mitteln herstellen, wodurch eine solche Kugel kostengünstig verfügbar und ebenfalls technisch einfach und somit kostengünstig in den Anker eingebracht werden kann.

Besonders robust und gegen Störungen unempfindlich ist eine Ausführungsform des hier vorgeschlagenen Ansatzes, bei dem Gehäuse vorgesehen ist, wobei ein der Erhebung gegenüberliegender Gehäuseabschnitt des Gehäuses des Kippankerventils eine Ausnehmung zur Aufnahme der Erhebung aufweist, insbesondere wobei der Gehäuseabschnitt die Spule zumindest teilweise umfasst oder aufnimmt. Auf diese Weise lässt sich die Erhebung örtlich fixieren, wodurch Falschbewegung des Ankers weitgehend verhindert wird und somit eine Fehlfunktion des Kippankerventils minimiert oder ganz ausgeschlossen werden kann.

Von Vorteil ist ferner eine Ausführungsform des hier vorgestellten Ansatzes, bei dem das Gehäuse des Kippankerventils im Wesentlichen zylindrisch ausgeformt ist. Eine solche Ausführungsform bietet den Vorteil einer sehr kompakten und dennoch robusten Ausgestaltung des Kippankerventils.

Gemäß einer weiteren Ausführungsform des hier vorgeschlagenen Ansatzes kann das Kippankerventil eine Feder zum Andrücken der zumindest einen Erhebung an das Spulenelement oder ein Gehäuse des Spulenelementes, insbesondere wobei die Feder als Blattfeder ausgebildet ist. Eine solche Ausführungsform des hier vorgeschlagenen Ansatzes bietet den Vorteil, dass der Anker durch die Verwendung der Feder sicher in einer definierten Ausgangslage gehalten werden kann bzw. bei der Bewegung des Ankers dieser im Wesentlichen lediglich über die Erhebung gleitet. Auf diese Weise kann ebenfalls eine Fehlfunktion des Kippankerventils weitgehend vermieden werden. Denkbar ist ferner, dass die Feder eine seitliche Führung des Ankers realisiert, insbesondere ohne den Anker zu umschließen. Auf diese Weise kann die Feder ein Verrutschen des Ankers in eine Richtung lateral zum Spulenelement verhindern. Technisch besonders einfach herstellen lässt sich eine Ausführungsform des hier vorgeschlagenen Ansatzes, bei der die Feder auf einer der Spule gegenüberliegenden Seite des Ankers angeordnet ist. Auf diese Weise lässt sich das Kippankerventil bei der Montage von Einzelteilen technisch sehr einfach herstellen.

Günstig ist ferner eine Ausführungsform des hier vorgestellten Ansatzes als Verfahren zur Herstellung eines Kippankerventils gemäß einer der hier vorgeschlagenen Ausführungsformen, wobei das Verfahren die folgenden Schritte aufweist: Bereitstellen eines Spulenelements, das mindestens einen Spulenkern und eine radial um den Spulenkern angeordnete Spule aufweist, eines Ankers, der an einer Stirnseite des Ankers mittels eines Lagers gelagert ist, wobei das Lager durch eine Erhebung in einem Lagerabschnitt des Ankers ausgebildet ist, wobei die Erhebung durch eine in den Lagerabschnitt des Ankers eingebrachte Kugel gebildet ist, eines Dichtelements, und einer Deckschale, in der ein Ventilsitz mit einem Ausgang und einem Eingang für ein Fluid ausgebildet ist; und Montieren des Spulenelements, der Anker, des Dichtelementes und der Deckschale derart, dass der Anker, insbesondere durch ein Beaufschlagen der Spule mit Strom, von einer ersten Position in eine zweite Position bewegbar ist, das Dichtelement an der dem Spulenelement abgewandten Seite des Ankers angeordnet ist und der Ausgang in der ersten Position des Ankers mittels des Dichtelements fluiddicht verschließbar ist und/oder der Ausgang in der zweiten Position des Ankers freigegeben ist.

Auch schafft der hier vorgestellte Ansatz in einer Ausführungsform ein Verfahren zum Betrieb einer Variante eines hier vorgestellten Kippankerventils, wobei das Verfahren den folgenden Schritt aufweist:
Beaufschlagen der Spule des Spulenelementes mit einem Strom, um den Anker von der ersten Position in die zweite Position zu verbinden.

Der hier vorgestellte Ansatz schafft ferner ein Steuergerät, das ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form eines Steuergeräts kann die der Erfindung zugrunde liegende Aufgabe schnell und effizient gelöst werden.

Hierzu kann das Steuergerät zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einem Steuergerät kann vorliegend ein elektrisches Gerät verstanden werden, das Sensorsignale verarbeitet und in Abhängigkeit davon Steuer- und/oder Datensignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Günstig ist weiterhin eine Ausführungsform des hier vorgestellten Ansatzes, bei dem die Feder ausgebildet ist, um den Anker seitlich zu führen und/oder den Anker in einer vorbestimmten Position zu halten. Eine solche Ausführungsform bietet den Vorteil einer vorteilhaften Mehrfachnutzung der Feder.

Auch kann gemäß einer weiteren Ausführungsform ein Führungselement zur axialen Führung des Ankers in einer Richtung zwischen einem Gehäusedeckel und dem Spulenelement vorgesehen sein, insbesondere wobei das Führungselement als ein Nadellager ausgebildet ist. Durch eine solche Ausführungsform kann der Anker sehr sicher axial gelagert sein.

Denkbar ist ferner eine Ausführungsform des hier vorgestellten Ansatzes, bei der der Ventilsitz als ein mehrteiliges Element ausgebildet ist, insbesondere wobei die Elemente des Ventilsitzes vor Inbetriebnahme des Kippankerventils aneinander fixiert wurden. Hierdurch kann beispielsweise eine mehrteilige Düse im Bereich des Ventilsitzes ausgeformt sein, die eine präzise Einstellung der Lage des Ankers des Kippankerventils ermöglicht.

Alternativ oder zusätzlich kann in einer weiteren Ausführungsform das Dichtelement als Dämpfungselement verwendbar sein und/oder das Dichtelement durch ein Vulkanisationsverfahren auf dem Anker befestigt worden sein und/oder der Anker als Dämpfer oder Dichtelement ausgebildet sein. Auch durch eine solche Ausführungsform des hier vorgestellten Ansatzes kann das herzustellende Kippankerventil technisch sehr einfach und dennoch zuverlässig arbeitend hergestellt werden.

Ausführungsbeispiele des hier vorgestellten Ansatzes sind in den Zeichnungen dargestellt und in der nachfolgenden Beschreibung näher erläutert. Es zeigt:
Fig. 1A eine Querschnittsdarstellung durch ein Kippankerventil gemäß einem Ausführungsbeispiel der vorliegenden Erfindung, bei dem sich der Anker in der ersten Position befindet;
Fig. 1B eine Querschnittsdarstellung durch ein Kippankerventil gemäß einem Ausführungsbeispiel der vorliegenden Erfindung, bei dem sich der Anker in der zweiten Position befindet;
Fig. 2 eine perspektivische Darstellung eines Ankers zur Verwendung in einem Kippankerventil gemäß einem Ausführungsbeispiel der vorliegenden Erfindung;
Fig. 3 ein Ablaufdiagramm eines Verfahrens zum Herstellen gemäß einem Ausführungsbeispiel der vorliegenden Erfindung;
Fig. 4 ein Ablaufdiagramm eines Verfahrens zum Betreiben gemäß einem Ausführungsbeispiel der vorliegenden Erfindung; und
Fig. 5 ein Blockschaltbild eines Ausführungsbeispiels der vorliegenden Erfindung als Steuergerät.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

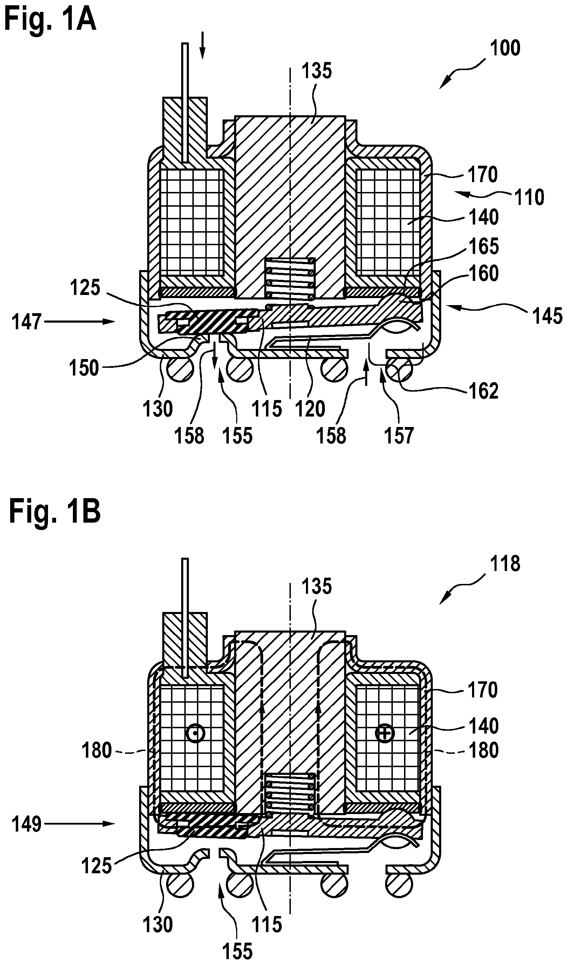

Fig. 1A zeigt eine Querschnittsdarstellung durch ein Kippankerventil 100 gemäß einem Ausführungsbeispiel der vorliegenden Erfindung, bei dem sich der Anker in der ersten Position befindet. Das Kippankerventil 100 weist ein Spulenelement 110, einen Anker 115, eine Feder 120, ein Dichtelement 125 sowie eine Deckschale 130 auf. Dabei umfasst das Spulenelement 110 zumindest einen Spulenkern 135 sowie eine radial um den Spulenkern 135 angeordnete Spule 140. Eine Stirnseite des Ankers 115 ist mittels eines Lagers 145 gelagert. Der Anker 115 ist zwischen einer ersten Position 147 und einer zweiten Position 149 bewegbar. Dabei ist der Anker 115 ausgebildet, bei einem Aktivieren der Spule 140 von der ersten Position 147 in die zweite Position 149 bewegt zu werden. Bei aktivierter Spule 135 kann der Anker 115 in der zweiten Position 149 gehalten werden. Auf der dem Spulenelement 110 abgewandten Seite des Ankers 115 ist weiterhin das Dichtelement 125 angeordnet. In der Deckschale 130 ist ein Ventilsitz 150 mit einem Ausgang 155 und ein Eingang 157 für ein Fluid 158 ausgebildet. Dabei ist der Ausgang 155 mittels des Dichtelements 125 fluiddicht verschließbar, wenn der Anker 115 in der ersten Position 147 angeordnet ist. Das Dichtelement 125 kann hierbei ferner auch als Dämpferelement wirken, um ein Aufprallen des Ankers 115 auf den Ventilsitz 150 zu verhindern. Das Dichtelement 125 kann hierbei durch ein Vulkanisieren auf dem Anker 115 oder einem Trägerelement befestigt sein. Denkbar ist ferner, dass ein Winkel beim Auftreffen des Ankers 115 bzw. Dichtelementes 125 auf dem Ventilsitz 150 durch eine schräge Düse oder ein schräg ausgeformtes Dichtelement 125 oder einen gekrümmten Anker 115 erzeugt wird. Eine solche Düse, die in der Fig. 1A nicht explizit dargestellt ist, braucht nicht zwangsläufig in das Kippankverventil 100 integriert sein, sondern kann auch von externen Gehäuseteilen bereitgestellt werden.

Denkbar ist ferner, dass der Ventilsitz 150 in dem Spulenelement 110 angeordnet ist, was jedoch aus Gründen der Übersichtlichkeit in der Fig. 1A nicht explizit dargestellt ist. In diesem Fall wäre dann ein Betätiger von Vorteil, der eine Freigabe des Ausgangs durch den Anker 115 vermittelt.

Der Anker 115 weist mindestens eine in einem Lagerabschnitt 162 eingebrachte Kugel auf, wobei die Erhebung 160 günstigerweise in eine Ausnehmung 165 oder Öffnung eingreift, die in einem der Erhebung 160 gegenüberliegenden Abschnitt eines Gehäuses 170 des Kippankerventils 100 angeordnet ist. Hierdurch kann der Anker 115 in der Ausnehmung bei einer Bewegung von der ersten Position 147 in die zweite Position 149 nach einem Einschalten eines Stromflusses durch die Spule 140 gleiten und wird zugleich an einer fixen Position in dem Gehäuse 170 bzw. in Bezug zu der Deckschale 130 gehalten. Günstigerweise ist die Ausnehmung trapezförmig ausgestaltet, sodass eine möglichst geringe Reibung beim Gleiten der Erhebung über die Fläche der Ausnehmung 165 verursacht wird. Die Ausnehmung 165 kann beispielsweise aus Kunststoffmaterial gefertigt und hierdurch sehr einfach und kostengünstig herstellbar sein.

Die Erhebung 160 ist in dem in der Fig. 1A dargestellten Ausführungsbeispiel als Kugel ausgeformt, die in dem Lagerabschnitt 162 des Lagers 145 in das Material des Ankers 115 eingepresst oder eingeklebt ist. Denkbar ist auch, dass die Kugel in dem Lagerabschnitt 162 mit dem Material des Ankers 115 verschweißt ist. Hierdurch wird eine sehr feste Verbindung der Kugel mit dem Anker 115 erreicht. Die Kugel kann aus einem Metall, beispielsweise aus Stahl, gefertigt sein und/oder ein anderes Material als der Anker 115 aufweisen. Hierzu kann das Material der Kugel nach einem Kriterium des möglichst geringen Verschleißes ausgewählt werden, wogegen das Material des Ankers 115 nach einem Kriterium des optimalen bzw. höchsten magnetischen Flusses ausgewählt werden kann.

Auch können zwei nebeneinander angeordnete Kugeln vorgesehen werden, was nachfolgend noch näher erläutert wird.

Die Feder 120 ist in diesem Ausführungsbeispiel als Blattfeder ausgebildet und um Lagerabschnitt auf einer der Spule 140 gegenüberliegenden Seite des Ankers 115 angeordnet. Die Feder 120 dient hierbei zum spielfreien Andrücken der beispielsweise im Anker 115 eingepressten Lagerkugel(n) in die (beispielsweise trapezförmige) Gegenschale bzw. Ausnehmung 165 im Gehäuse 170 des Spulenelementes 110. Der Anker 115 kann durch die Feder 120 fixiert werden, sodass der Anker 115 durch die Feder 120 in einer vorbestimmten Position gehalten wird. Dies bietet den Vorteil, dass eine konstante Vorspannkraft auf den Anker 115 ausgeübt werden kann, und die von der Feder 120 auf den Anker 115 ausgeübte Kraft möglichst nahe an einem an der Drehachse liegenden Kraftangriffspunkt auf den Anker 115 eingeleitet werden kann.

Alternativ kann auch der Anker 115 an dem Spulenelement 110 eingehängt werden. In diesem Fall könnte dann die Feder 120, die beispielsweise als Blattfeder ausgestaltet ist, entfallen.

Denkbar ist weiterhin eine Ausführungsform des hier vorgestellten Ansatzes, bei dem ein in der Fig. 1A nicht dargestelltes Nadellager zur Realisierung einer seitlichen Führung des Ankers 115 verwendet werden kann. Auf diese Weise kann eine sehr stabile Führung des Ankers 115 erreicht werden.

Im Unterschied zu Ausführungen von Kippankerventilen, bei denen der vom Medium beaufschlagte Bereich von demjenigen Bereich getrennt ist, in dem der magnetische Fluss aufgebaut wird, hat die hier dargestellte Ausführung eine Doppelfunktion. Der Bereich, um den Anker 115 herum ist abgedichtet und trennt die vom Medium beaufschlagten Bereiche. Diese Bereiche führen auch den Magnetfluss.

Fig. 1B zeigt eine Querschnittsdarstellung durch ein Kippankerventil 100 gemäß einem Ausführungsbeispiel der vorliegenden Erfindung, bei dem sich der Anker 115 in der zweiten Position 149 befindet. In diesem Fall ist ein Strom durch die Spule 140 eingeschaltet und der Anker 115 angezogen, sodass sich ein durch die Feldlinien 180 dargestelltes Magnetfeld aufbaut. Bei einem Ausschalten des Stroms durch die Spule 140 kann beispielsweise durch die Schwerkraft der Anker 115 in die erste Position 147 zurückfallen.

Durch die Magnetkraft im eingeschalteten Zustand der Spule 140 wird die Lagerkraft auf die Erhebungen 160 verstärkt. Bei einem nicht aufmagnetisierten Magnetfeld kann die Lagerkraft dagegen gering sein, da auch die Querkräfte gering sind. Die Lagerung des Ankers 115 im nicht-magnetisierten Zustand kann in diesem Fall auf einem sehr geringen Kraftniveau erfolgen, was vorteilhaft wiederum einen reduzierten Verschleiß bedeutet.

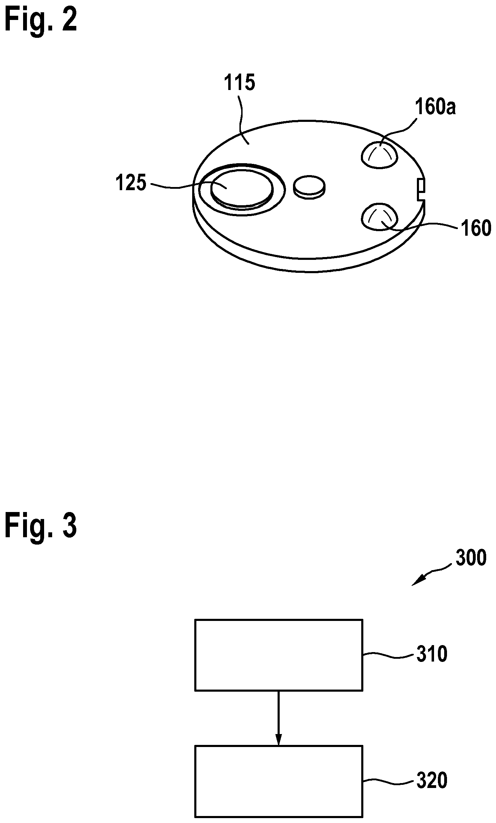

Fig. 2 zeigt eine perspektivische Darstellung eines Ankers 115 zur Verwendung in einem Kippankerventil 100 gemäß einem Ausführungsbeispiel der vorliegenden Erfindung. In diesem Ausführungsbeispiel weist der Anker neben dem Dichtelement 125 mehrere (hier zwei) Kugeln als Erhebungen 160 bzw 160a auf, die in einer Richtung angeordnet sind, die eine Drehachse des Ankers 115 bei der Drehung nach einem Einschalten des Stroms durch die Spule 140 bildet. Diese Kugeln als Erhebungen 160 bzw. 160a können in beispielsweise je eine omega-förmige Aussparung im Anker 115 beispielsweise mit konstanter Kraft eingepresst werden, wodurch einerseits eine Materialbelastung beim Einpressen der Kugeln 160 bzw. 160a in den Anker 115 reduziert werden kann und andererseits dennoch ein sicherer Halt der Kugeln gewährleistet werden kann.

Zusammenfassend ist anzumerken, dass im Gegensatz zu herkömmlichen Ansätzen mit dem hier vorgestellten Ansatz eine Lagerung vorgeschlagen wird, welche kein Nadellager und eine axiale Führung des Nadellagers durch eine Feder benötigt. Hier durch kann auf eine komplexe Feder verzichtet werden. Bei dem hier vorgestellten Ansatz wird das Nadellager durch die zumindest eine Erhebung im Anker 115 insbesondere durch zwei Lagerkugeln ersetzt. Hierdurch können dann beispielsweise zwei Achsrichtungen fixiert werden und es kann auf eine axiale Führung durch die Feder verzichtet werden. Es ist hierdurch auch in der zweiten Achsrichtung eine präzisere Lagerung des Ankers 115 möglich.

Beim hier vorgestellten Konzept mit zumindest einer Erhebung 160, insbesondere zwei Kugeln als Erhebungen 160 lässt sich keine schwimmende Lagerung des Ankers 115 mehr realisieren, sondern eine feste Lagerung, wodurch sich eine bessere Zentrierung mit daraus resultierenden geringeren magnetischen Querkräften und somit weniger Lagerverschleiß ermöglichen lässt.

Als weiterer Vorteil des hier vorgestellten Ansatzes lässt sich nennen, dass nun durch einen Verzicht auf die axiale Führung in der Form des Nadellagers durch die Feder die Lagerstelle innerhalb des beispielsweise zylindrischen Gehäuses 170 platziert werden kann. Dadurch ist eine deutlich verbesserte Herstellbarkeit des Gehäuses 170 erzielbar.

Weiterhin ist der hier vorgestellte Ansatz vorteilhaft, da hierdurch ein Verfahren zur wirtschaftlichen Herstellung des Ankers möglich wird, da auf der können im Stanzprozess die Kugeln eingepresst und verstemmt werden können bzw. die Erhebung direkt in den Anker eingepresst oder eingestanzt werden kann.

Vorteilhaft ist es ferner, wenn der Spulenkörper derart ausgeführt ist, dass sich die im Kunststoff vom Spulenkörper bzw. Spulenelement 110 bzw. dessen Gehäuse 170 befindenden Ausnehmungen 165 als Lagerstellen trapezförmig ausgeführt sind. Des Weiteren ist es von Vorteil, wenn eine der Gegenlagerstellen der Kugeln als Längsloch ausgeführt ist. Dadurch kann die Toleranzabweichung aus dem Abstand der zwei Kugeln als Erhebungen 160 ausgeglichen werden, d. h., eine Kugel fixiert dann die zweite Achse. Durch beide Kugeln verläuft dann die erste Achse.

Im Gegensatz zu herkömmlichen Ansätzen, bei denen beispielsweise eine Feder verwendet wird, welche den Anker umschließt und mehrere Funktionen gelichzeitig hat, ist es vorteilhaft zwei Federn zu verwenden, beispielsweise für jede noch verbleibende Funktion eine Feder. Mit einer der verbleibenden Federn kann gemäß dem hier vorgestellten Ansatz der Anker 115 spielfrei gelagert werden, wenn die Feder 120 zwischen den Lagerstellen bzw. Erhebung(en) 160 angreift. Diese Feder 120 kann als Blattfeder ausgeführt werden, welche beispielsweise ihre Kraft mittig zwischen den Lagerkugeln als Erhebungen 160 einleitet. Alternativ sind auch zwei Spiralfedern denkbar, welche beispielsweise direkt auf die Lagerkugeln als Erhebungen 160 wirken. Das heißt, die Lagerkugeln als Erhebungen 160 dienen auf der einen Seite als Lagerstelle und auf der anderen Seite als Federaufnahme. Insbesondere ist hierbei ein Ausführungsbeispiel der vorliegenden Erfindung als Kippankerventil mit Kugellagerung vorgestellt.

Fig. 3 zeigt ein Ablaufdiagramm eines Verfahrens 300 zum Herstellen gemäß einem Ausführungsbeispiel der vorliegenden Erfindung. Das Verfahren 300 zur Herstellung eines Kippankerventils 100 gemäß einer hier vorgestellten Variante umfasst einen Schritt 310 des Bereitstellens eines Spulenelements, das mindestens einen Spulenkern und eine radial um den Spulenkern angeordnete Spule aufweist, eines Ankers, der an einer Stirnseite des Ankers mittels eines Lagers gelagert ist, wobei das Lager durch eine Erhebung in einem Lagerabschnitt des Ankers ausgebildet ist, wobei die Erhebung durch eine in den Lagerabschnitt des Ankers eingebrachte Kugel gebildet ist, eines Dichtelements, und einer Deckschale, in der ein Ventilsitz mit einem Ausgang und einem Eingang für ein Fluid ausgebildet ist. Ferner umfasst das Verfahren 300 zum Herstellen einen Schritt 320 des Montierens des Spulenelements, des Ankers, des Dichtelementes und der Deckschale derart, dass der Anker, insbesondere durch ein Beaufschlagen der Spule mit einem Strom, von einer ersten Position in eine zweite Position bewegbar ist, das Dichtelement an der dem Spulenelement abgewandten Seite des Ankers angeordnet ist und der Ausgang in der ersten Position des Ankers mittels des Dichtelements fluiddicht verschließbar ist und/oder der Ausgang in der zweiten Position des Ankers freigegeben ist.

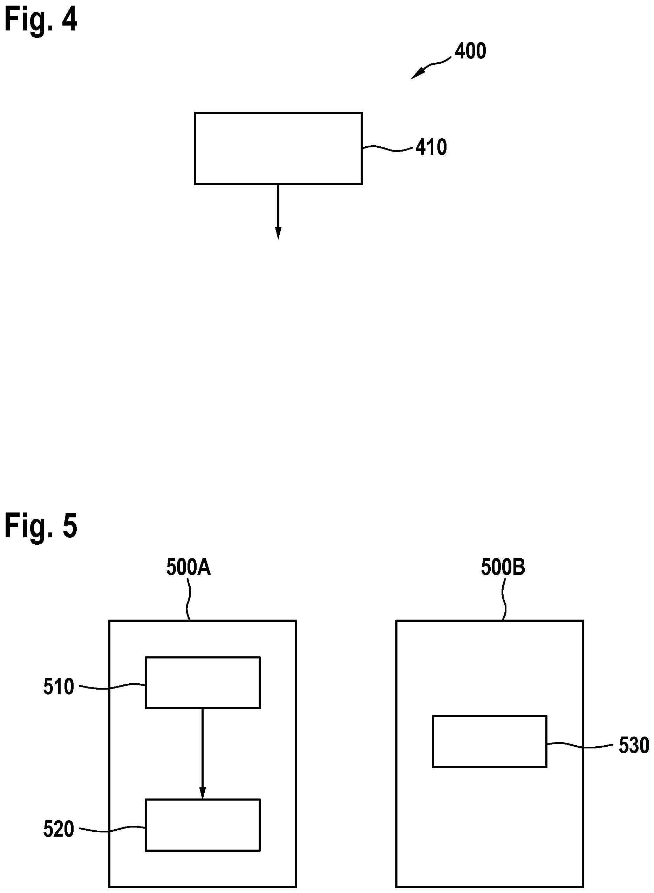

Fig. 4 zeigt ein Ablaufdiagramm eines Verfahrens 400 zum Betrieb eines Kippankerventils 100 gemäß einer hier vorgestellten Variante. Das Verfahren 400 zum Betrieb eines Kippankerventils 100 umfasst einen Schritt 410 des Beaufschlagens der Spule des Spulenelementes mit einem Strom, um den Anker von der ersten Position in die zweite Position zu verbinden.

Fig. 5 zeigt je ein Blockschaltbild eines Ausführungsbeispiels der vorliegenden Erfindung als Steuergerät 500A bzw. 500B. Das Steuergerät 500A umfasst eine Einheit 510 zum Bereitstellen eines Spulenelements, das mindestens einen Spulenkern und eine radial um den Spulenkern angeordnete Spule aufweist, eines Ankers, der an einer Stirnseite des Ankers mittels eines Lagers gelagert ist, wobei das Lager durch eine Erhebung in einem Lagerabschnitt des Ankers ausgebildet ist, wobei die Erhebung durch eine in den Lagerabschnitt des Ankers eingebrachte Kugel gebildet ist, eines Dichtelements, und einer Deckschale, in der ein Ventilsitz mit einem Ausgang und einem Eingang für ein Fluid ausgebildet ist. Weiterhin umfasst das Steuergerät 500 eine Einheit 520 zum Montieren des Spulenelements, des Ankers, des Dichtelementes und der Deckschale derart, dass der Anker durch ein Aktivieren der Spule von einer ersten Position in eine zweite Position bewegbar ist, das Dichtelement an der dem Spulenelement abgewandten Seite des Ankers angeordnet ist und der Ausgang in der ersten Position des Ankers mittels des Dichtelements fluiddicht verschließbar ist und/oder der Ausgang in der zweiten Position des Ankers freigegeben ist.

Das Steuergerät 500B umfasst eine Einheit 530 zum Beaufschlagen der Spule des Spulenelementes mit einem Strom, um den Anker von der ersten Position in die zweite Position zu verbinden.

Die Rückseite des Kippankerventils 100 kann sowohl als Dämpfer oder als Dichtelement verwendet werden, beispielsweise für 2/2NO oder für 3/2-Magnetventile. Hierdurch kann das Kippankerventil 100 als Teilelement diverser Magnetventilfamilien vorteilhaft verwendet werden, wodurch die Flexibilität des Einsatzes des Kippankerventils 100 deutlich erhöht werden kann.

Aller Vorteil des hier vorgestellten Ansatzes gegenüber der Verwendung eines Tauchankers lässt sich anführen, dass eine unbehinderte Luftführung durch den Kern oder einen Bereich zwischen dem Spulenkörper und dem Kern ermöglich werden kann. Die hier vorgestellten Ausführungsbeispiele eines Kippankerventils bzw. des Verfahrens zur Herstellung bzw. zum Betrieb des Kippankerventils kann für alle Applikationen, Hydraulik, Pneumatik, Stellmagnete verwendet werden, insbesondere klar für alle Anwendungen im Bereich der Fahrzeuge wie beispielsweise in Bremsen, Luftfederungen, Luftaufbereitungen, Getrieben und für Regelmagnetventilen und für Schaltventile.

### BEZUGSZEICHENLISTE

- 100: Kippankerventil
- 110: Spulenelement
- 115: Anker
- 120: Feder
- 125: Dichtelement
- 130: Deckschale
- 135: Spulenkern
- 140: Spule
- 145: Lager
- 147: erste Position
- 149: zweite Position
- 150: Ventilsitz
- 155: Ausgang
- 157: Eingang
- 160: Erhebung
- 160a: weitere Erhebung
- 162: Lagerabschnitt
- 165: Ausnehmung
- 170: Gehäuse

- 300: Verfahren zum Herstellen eines Kippankerventils
- 310: Schritt des Bereitstellens
- 320: Schritt des Montierens

- 400: Verfahren zum Betrieb eines Kippankerventils
- 410: Schritt des Beaufschlagens

- 500A: Steuergerät zur Ausführung eines Verfahrens zur Herstellung
- 510: Einheit zum Bereitstellen
- 520: Einheit zum Montieren
- 500B: Steuergerät zur Ausführung eines Verfahrens zum Betrieb
- 530: Einheit zum Beaufschlagen

## Patentansprüche

1. Kippankerventil (100), das zumindest die folgenden Merkmale aufweist:
ein Spulenelement (110) umfassend mindestens einen Spulenkern (135) und eine radial um den Spulenkern (135) angeordnete Spule (140);
einen Anker (115), der an einer Stirnseite des Ankers (115) mittels eines Lagers (145) gelagert ist, wobei der Anker (115) von einer ersten Position (147) in eine zweite Position (149) bewegbar ist, wobei das Lager (145) durch eine Erhebung (160) in einem Lagerabschnitt (162) des Ankers (115) ausgebildet ist;
ein Dichtelement (125), das an der dem Spulenelement (110) zugewandten oder abgewandten Seite des Ankers (115) angeordnet ist; und
ein Ventilsitz (150) mit einem Ausgang (155) und ein Eingang (157) für ein Fluid (158), wobei der Ausgang (155) in der ersten Position (147) des Ankers (115) mittels des Dichtelements (125) fluiddicht verschließbar ist und/oder wobei der Ausgang (155) in der zweiten Position (149) des Ankers (115) freigegeben ist, insbesondere wobei der Ventilsitz (150) an einer dem Spulenelement (110) zugewandten oder abgewandten Seite in Bezug zum Anker (115) angeordnet ist,
**dadurch gekennzeichnet, dass**
die Erhebung (160) durch eine in den Lagerabschnitt (162) des Ankers (115) eingebrachte Kugel gebildet ist.

2. Kippankerventil (100) gemäß Anspruch 1, **dadurch gekennzeichnet, dass** die Erhebung (160) auf einer der Spule (140) zugewandten Seite des Lagerabschnitts (162) des Ankers (115) angeordnet ist.

3. Kippankerventil (100) gemäß einem der vorangegangenen Ansprüche, **gekennzeichnet durch** zumindest eine weitere Erhebung (160a) in dem Lagerabschnitt (162), insbesondere wobei die weitere Erhebung (160a) durch eine in den Lagerabschnitt (162) des Ankers (115) eingebrachte Kugel gebildet ist.

4. Kippankerventil (100) gemäß Anspruch 3, **dadurch gekennzeichnet, dass** die weitere Erhebung (160a) auf einer der Spule (140) zugewandten Seite des Lagerabschnitts (162) des Ankers (115) angeordnet ist und/oder zumindest teilweise eine Kugelform oder Kugelkalottenform aufweist.

5. Kippankerventil (100) gemäß einem der vorangegangenen Ansprüche, **dadurch gekennzeichnet, dass** die Erhebung (160) und die weitere Erhebung (160a) in einer Richtung zueinander ausgerichtet sind, die eine Drehachse des Ankers (115) bildet.

6. Kippankerventil (100) gemäß einem der vorangegangenen Ansprüche, **dadurch gekennzeichnet, dass** die Kugel in den Lagerabschnitt (162) des Ankers (115) eingepresst und/oder eingegossen ist und/oder wobei die eingebrachte Kugel in eine omega-förmige Aussparung des Ankers (115) eingebracht ist.

7. Kippankerventil (100) gemäß einem der vorangegangenen Ansprüche mit einem Gehäuse (170), **dadurch gekennzeichnet, dass** ein der Erhebung (160) gegenüberliegender Abschnitt des Gehäuses (170) des Kippankerventils (100) eine Ausnehmung (170) zur Aufnahme der Erhebung (160) aufweist, insbesondere wobei der Abschnitt die Spule (140) zumindest teilweise umfasst oder aufnimmt.

8. Kippankerventil (100) gemäß einem der vorangegangenen Ansprüche, **gekennzeichnet durch** eine Feder (120) zum Andrücken der zumindest einen Erhebung (160) an das Spulenelement (110) oder ein Gehäuse (170) des Kippankerventils (100), insbesondere wobei die Feder (120) als Blattfeder, Schenkelfeder oder Drahtbiegelement ausgebildet ist.

9. Kippankerventil (100) gemäß Anspruch 8, **dadurch gekennzeichnet, dass** die Feder (120) auf einer der Spule (140) gegenüberliegenden Seite des Ankers (115) angeordnet ist.

10. Kippankerventil (100) gemäß einem der Ansprüche 8 oder 9, **dadurch gekennzeichnet, dass** die Feder (120) ausgebildet ist, um den Anker (115) seitlich zu führen und/oder den Anker (115) in einer vorbestimmten Position zu halten.

11. Kippankerventil (100) gemäß einem der vorangegangenen Ansprüche, **dadurch gekennzeichnet, dass** ein Führungselement zur axialen Führung des Ankers (115) in einer Richtung zwischen einem Gehäusedeckel (130) und dem Spulenelement vorgesehen ist, insbesondere wobei das Führungselement als ein Nadellager ausgebildet ist.

12. Kippankerventil (100) gemäß einem der vorangegagenen Ansprüche, **dadurch gekennzeichnet, dass** der Ventilsitz (150) als ein mehrteiliges Element ausgebildet ist, insbesondere wobei die Elemente des Ventilsitzes vor Inbetriebnahme des Kippankerventils (100) aneinander fixiert wurden.

13. Kippankerventil (100) gemäß einem der vorangegangenen Ansprüche, **dadurch gekennzeichnet, dass** das Dichtelement (125) als Dämpfungselement verwendbar ist und/oder wobei das Dichtelement (125) durch ein Vulkanisationsverfahren auf dem Anker (115) befestigt wurde und/oder wobei der Anker (115) als Dämpfer oder Dichtelement ausgebildet ist.

14. Verfahren (400) zur Herstellung eines Kippankerventils (100) gemäß einem der vorangegangenen Ansprüche, wobei das Verfahren (400) die folgenden Schritte aufweist:
- Bereitstellen (410) eines Spulenelements (110), das mindestens einen Spulenkern (135) und eine radial um den Spulenkern (135) angeordnete Spule (140) aufweist, eines Ankers (115), der an einer Stirnseite des Ankers (115) mittels eines Lagers (145) gelagert ist, wobei das Lager (145) durch eine Erhebung (160) in einem Lagerabschnitt (162) des Ankers (115) ausgebildet ist, wobei die Erhebung (160) durch eine in den Lagerabschnitt (162) des Ankers (115) eingebrachte Kugel gebildet ist, eines Dichtelements (125), und einer Deckschale (130), in der ein Ventilsitz (150) mit einem Ausgang (155) und einem Eingang (157) für ein Fluid (158) ausgebildet ist; und
- Montieren (420) des Spulenelements (110), des Ankers (115), des Dichtelementes (125) und der Deckschale (130) derart, dass der Anker (115) von einer ersten Position (147) in eine zweite Position (149) bewegbar ist, das Dichtelement (125) an der dem Spulenelement (110) abgewandten Seite des Ankers (115) angeordnet ist und der Ausgang (155) in der ersten Position (147) des Ankers (115) mittels des Dichtelements (125) fluiddicht verschließbar ist und/oder der Ausgang (155) in der zweiten Position (149) des Ankers (115) freigegeben ist.

## Claims

1. Tilting armature valve (100) having at least the following features:
a coil element (110) having at least one coil core (135) and a coil (140) arranged radially around the coil core (135);
an armature (115) mounted on a face side of the armature (115) by way of a bearing (145), wherein the armature (115) is movable from a first position (147) to a second position (149), and wherein the bearing (145) is re[resented by a bump (160) in a bearing portion (162) of the armature (115);
a sealing element (125) arranged on the side of the armature (115) facing the coil element (110) or facing away therefrom; and
a valve seat (15) having an outlet (155) and an inlet (157) for a fluid (145), wherein the outlet (155) is closable in a fluid-tight manner by way of the sealing element (125) in the first position (147) of the armature (115) and/or wherein the outlet (155) is released in the second position (149) of the armature (115), in particular wherein the valve seat (15) is arranged on a side facing the coil element (110) or facing away therefrom with respect to the armature (115),
**characterised in that**
the bump (160) is represented by a ball incorporated into the bearing portion (162) of the armature (115).

2. Tilting armature valve (100) according to claim 1, **characterised in that** the bump (160) is arranged on a side of the bearing portion (162) of the armature (115) facing the coil (140).

3. Tilting armature valve (100) according to any of the preceding claims, **characterised by** at least one further bump (160a) in the bearing portion (162), in particular wherein the further bump (160a) is represented by a ball incorporated into the bearing portion (162) of the armature (115).

4. Tilting armature valve (100) according to claim 3, **characterised in that** the further bump (160a) is arranged on a side of the bearing portion (162) of the armature (115) facing the coil (140) and/or at least partially has a spherical shape or spherical cap shape.

5. Tilting armature valve (100) according to any of the preceding claims, **characterised in that** the bump (160) and the further bump (160a) are oriented towards each other in a direction forming a rotational axis of the armature (115).

6. Tilting armature valve (100) according to any of the preceding claims, **characterised in that** the ball is pressed and/or moulded into the bearing portion (162) of the armature (115) and/or **in that** the incorporated ball is incorporated into an omega-shaped recess of the armature (115).

7. Tilting armature valve (100) according to any of the preceding claims with a housing (170), **characterised in that** a portion of the housing (170) of the tilting armature valve (100) opposite the bump (160) comprises a recess (170) for accommodating the bump (160), in particular wherein the portion at least partially encompasses or accommodates the coil (140).

8. Tilting armature valve (100) according to any of the preceding claims, **characterised by** a spring (120) for pushing the at least one bump (16) against the coil element (110) or a housing (170) of the tilting armature valve (100), in particular wherein the spring is (120) designed as a leaf spring, leg spring or wire bending element.

9. Tilting armature valve (100) according to claim 8, **characterised in that** the spring (120) is arranged on a side of the armature (115) opposite from the coil (140).

10. Tilting armature valve (100) according to claim 8 or 9, **characterised in that** the spring (120) is configured to laterally guide the armature (115) and/or hold the armature (115) in a predetermined position.

11. Tilting armature valve (100) according to any of the preceding claims, **characterised in that** a guiding element axially guiding the armature (115) in a direction is provided between a housing cover (130) and the coil element, in particular wherein the guiding element is designed as a needle bearing.

12. Tilting armature valve (100) according to any of the preceding claims, **characterised in that** the valve seat (150) is designed as a multipart element, in particular wherein the elements of the valve seat have been fixed to each other prior to start-up of the tilting armature valve (100).

13. Tilting armature valve (100) according to any of the preceding claims, **characterised in that** the sealing element (125) is usable as a damping element and/or **in that** the sealing element (125) has been attached on the armature (115) by way of a vulcanisation method and/or the armature (115) is designed as a damper or sealing element.

14. Method (400) for producing a tilting armature valve (100) according to any of the preceding claims, the method (400) comprising the following steps:
- providing (410) a coil element (110) having at least a coil core (135) and a coil (140) arranged radially around the coil core (135), an armature (115) mounted by way of a bearing (145) on a face side of the armature, wherein the bearing (145) is represented by a bump (16) in a bearing portion (162) of the armature (115), wherein the bump (160) is represented by a ball incorporated into the bearing portion (162) of the armature (115), a sealing element (125) and a cover shell (130) in which a valve seat (150) is formed with an outlet (155) and an inlet (157) for a fluid (158); and
- mounting (420) the coil element (110), the armature (115), the sealing element (125) and the cover shell (130) such that the armature (115) is movable from a first position (147) to a second position (149), the sealing element (125) is arranged on the side of the armature (115) facing away from the coil element (110), and the outlet (155) is closable in a fluid-tight manner by way of the sealing element (125) in the first position (147) of the armature (115) and/or the outlet (155) is released in the second position (149) of the armature (115).

## Revendications

1. Vanne (100) à induit basculant qui a au moins les caractéristiques suivantes :
un élément (110) de bobine, comprenant au moins un noyau (135) de bobine, et une bobine (140) disposée radialement autour du noyau (135) de bobine ;
un induit (115), qui est monté d'un côté frontal de l'induit (115) au moyen d'un palier (145), l'induit (115) pouvant passer d'une première position (147) à une deuxième position (149), le palier (145) étant formé par un bossage (160) dans une partie (162) de palier de l'induit (115) ;
un élément (125) d'étanchéité, qui est disposé du côté de l'induit (115) tourné vers l'élément (110) de bobine ou du côté opposé et
un siège (150) de vanne ayant une sortie (155) et une entrée (157) pour un flux (158), la sortie (155) pouvant, dans la première position (147) de l'induit (115), être fermée d'une manière étanche aux fluides au moyen de l'élément (125) d'étanchéité et/ou dans lequel la sortie (155) est dégagée dans la deuxième position (149) de l'induit (115), notamment dans lequel le siège (150) de la vanne est disposé par rapport à l'induit (115) d'un côté tourné vers l'élément (110) de bobine ou du côté opposé,
**caractérisée en ce que**
le bossage (160) est formé d'une bille incorporée dans la partie (162) de palier de l'induit (115).

2. Vanne (100) à induit basculant suivant la revendication 1, **caractérisée en ce que** le bossage (160) est disposé du côté, tourné vers la bobine (140), de la partie (162) de palier de l'induit (115).

3. Vanne (100) à induit basculant suivant l'une des revendications précédentes, **caractérisée en ce qu'**au moins un autre bossage (160a) est formé dans la partie (162) de palier, notamment dans laquelle l'autre bossage (160a) est formé par une bille incorporée dans la partie (162) de palier de l'induit (115).

4. Vanne (100) à induit basculant suivant la revendication 3, **caractérisée en ce que** l'autre bossage (160a) est disposé d'un côté, tourné vers la bobine (140), de la partie (162) de palier de l'induit (115) et/ou a au moins une forme sphérique ou une forme de calotte sphérique.

5. Vanne (100) à induit basculant suivant l'une des revendications précédentes, **caractérisée en ce que** le bossage (160) et l'autre bossage (160a) sont dirigés l'un vers l'autre en formant un axe de rotation de l'induit (115) .

6. Vanne (100) à induit basculant suivant l'une des revendications précédentes, **caractérisée en ce que** la bille est pressée et/ou coulée dans la partie (162) de palier de l'induit (115) et/ou la bille incorporée est incorporée dans un évidement en forme d'oméga de l'induit (115).

7. Vanne (100) à induit basculant suivant l'une des revendications précédentes comprenant une enveloppe (170), **caractérisée en ce qu'**une partie, opposée au bossage (160), de l'enveloppe (170) de la vanne (100) à induit basculant a un évidement (170) de réception du bossage (160), notamment dans laquelle la partie comprend ou reçoit au moins en partie la bobine (140).

8. Vanne (100) à induit basculant suivant l'une des revendications précédentes, **caractérisée par** un ressort (120) pour pousser le au moins un bossage (160) sur l'élément (110) de bobine ou sur une enveloppe (170) de la vanne (100) à induit basculant, le ressort (120) étant constitué notamment sous la forme d'un ressort à lame, d'un ressort spirale ou d'un élément cambré à fil.

9. Vanne (100) à induit basculant suivant la revendication 8, **caractérisée en ce que** le ressort (120) est disposé du côté de l'induit (115) opposé à la bobine (140).

10. Vanne (100) à induit basculant suivant la revendication 8 ou 9, **caractérisée en ce que** le ressort (120) est constitué pour guider latéralement l'induit (115) et/ou pour maintenir l'induit (115) en une position définie à l'avance.

11. Vanne (100) à induit basculant suivant l'une des revendications précédentes, **caractérisée en ce qu'**un élément de guidage pour guider axialement l'induit (115) dans une direction est prévu entre un couvercle (130) de l'enveloppe et l'élément de bobine, l'élément de guidage étant constitué notamment sous la forme d'un palier à aiguille.

12. Vanne (100) à induit basculant suivant l'une des revendications précédentes, **caractérisée en ce que** le siège (150) de la vanne est constitué sous la forme d'un élément en plusieurs pièces, dans laquelle notamment les éléments du siège de la vanne ont été immobilisés les uns par rapport aux autres avant la mise en service de la vanne (100) à induit basculant.

13. Vanne (100) à induit basculant suivant l'une des revendications précédentes, **caractérisée** en ce l'élément (125) d'étanchéité peut être utilisé comme élément d'amortissement et/ou dans laquelle l'élément (125) d'étanchéité a été fixé par un procédé de vulcanisation à l'induit (115) et/ou dans laquelle l'induit (115) est constitué en amortisseur ou en élément d'étanchéité.

14. Procédé (400) de fabrication d'une vanne (100) à induit basculant suivant l'une des revendications précédentes, le procédé (400) ayant les stades suivants :
- on met (410) à disposition un élément (110) de bobine, qui a au moins un noyau (135) de bobine et une bobine (140) disposée radialement autour du noyau (135) de bobine, un induit (115), qui est monté d'un côté frontal de l'induit (115) au moyen d'un palier (145), le palier (145) étant constitué par un bossage (160) dans une partie (160) de palier de l'induit (115), le bossage (160) étant formé par une bille incorporée dans la partie (162) de palier de l'induit (115), un élément (125) d'étanchéité et une coque (130) de couvercle, dans laquelle un siège (150) de vanne ayant une sortie (155) et une entrée (157) pour un fluide est constitué et
- on monte (420) l'élément (110) de bobine, l'induit (115), l'élément (125) d'étanchéité et la coque (130) de couvercle, de manière à ce que l'induit (115) puisse passer d'une première position (147) à une deuxième position (149), que l'élément (125) d'étanchéité soit disposé du côté, opposé à l'élément (110) de bobine, de l'induit (115) et que la sortie (155) puisse, dans la première position (147) de l'induit (115), être fermée d'une manière étanche aux fluides au moyen de l'élément (125) d'étanchéité et/ou de manière à ce que la sortie (155) soit dégagée, dans la deuxième position (149) de l'induit (115).
